# EUROPEAN PATENT APPLICATION

(11) **EP 4 494 770 A1**
(43) Date of publication of application: **22.01.2025**
(21) Application number: 23770304.6
(22) Date of filing: 22.02.2023
(51) Int. Cl.: B05D 1/28, B29C 63/02, B29C 65/48, B32B 27/00, B32B 37/12, B65D 65/40, C09J 11/06, C09J 167/00

(54) **METHOD FOR PRODUCING LAMINATED FILM, LAMINATED FILM, AND PACKAGING CONTAINER**

(30) Priority: 18.03.2022 JP 2022043627
(71) Applicant: Toyo Seikan Co., Ltd., Tokyo 141-8640 (JP)
(72) Inventor: GOTOU, Osamu, Yokohama-shi, Kanagawa 230-0001 (JP); SAEKI, Mayumi, Yokohama-shi, Kanagawa 230-0001 (JP); HARA, Takuya, Yokohama-shi, Kanagawa 230-0001 (JP); ITOU, Yusuke, Yokohama-shi, Kanagawa 230-0001 (JP)
(74) Representative: dompatent von Kreisler Selting Werner - Partnerschaft von Patent- und Rechtsanwälten mbB
(86) International application number: PCT/JP2023/006458
(87) International publication number: WO 2023/176345

(57) **Abstract**

To provide a method for producing a laminated film, a laminated film, and a packaging container, which are capable of reducing an environmental load and suppressing generation of air bubbles in an adhesive layer. In the method for producing a laminated film. a solventless adhesive has a viscosity at 50°C of from 700 to 2000 mPa s. The coating device further includes a coating unit, the coating unit including: a pair of rolls, a plurality of transfer rolls configured to sequentially transfer and supply the solventless adhesive, and an application roll disposed on the opposite side of a fine clearance from a doctor roll, the doctor roll being one of the plurality of transfer rolls and positioned at an end on a side where supply of the solventless adhesive starts. A peripheral speed of the doctor roll is from 1.0 to 10.0 m/min.

## Description

### Technical Field

The present invention relates to a method for producing a laminated film in which a laminated film is produced by bonding raw material films using a solventless adhesive, a laminated film produced by the method, and a packaging container formed by the laminated film.

### Background Art

A pouch packaging container used for food packaging and a flexible packaging container used for a cup lid are typically composed of a laminated film in which a plurality of raw material films such as resin films are laminated.

In such packaging containers, for example, when resin films having different characteristics, such as a combination of a nylon film and a polyethylene film, are laminated, the films are generally bonded by an adhesive for lamination because of poor adhesion between the films.

As such an adhesive, it is desired to use a solventless adhesive which does not contain any organic solvent and can be coated by heating the adhesive to lower its viscosity from the viewpoint of reducing a global environmental load. An example in the related art of a laminated film using a known solventless adhesive includes a laminated film having an adhesive layer made of a solventless adhesive which is composed of a main agent made of polyester polyol and a curing agent made of an aliphatic diisocyanate compound and an alicyclic diisocyanate, and has a viscosity at 70°C of from 300 to 900 mPa·s (see Patent Document 1).

### Citation List

### Patent Document

Patent Document 1: JP 5397584 B

### Summary of Invention

### Technical Problem

However, in the laminated film using a solventless adhesive, large air bubbles are likely to be generated in the adhesive layer, which causes an appearance defect in which a large number of spot-like fine uneven patterns, called so-called orange peel, are generated in the laminated film. In particular, when the laminated film is subjected to a heating treatment, orange peel is remarkably generated.

On the other hand, a packaging container used in the field of foods using a laminated film is often subjected to a heating treatment due to need for sterilization or the like for preserving foods. As a result, in appearance, orange peel is generated in the food packaging container subjected to the heating treatment. Furthermore, a doubt can arise for preservability of foods accommodated in the container, since it is considered that gaps are formed in the adhesive layer from the fact that the cause of orange peel is air bubbles generated in the adhesive layer as described above.

The present invention has been made in view of the above-described circumstances, and an object thereof is to provide a method for producing a laminated film, a laminated film, and a packaging container, which are capable of reducing an environmental load and, besides, suppressing generation of air bubbles in an adhesive layer.

### Solution to Problem

A method for producing a laminated film according to the present invention includes coating a first film with a solventless adhesive in a coating device, the coating device including a pair of rolls opposed to each other, the first film passing between the pair of rolls, and laminating a second film on the first film while superposing the second film on the first film with the first film and the second film sandwiching an adhesive-applied layer made of the solventless adhesive. The solventless adhesive contains a main agent made of a polyester-based resin and a curing agent made of an aliphatic isocyanate. The solventless adhesive has a viscosity at 50°C of from 700 to 2000 mPa·s. The coating device further includes a coating unit. The coating unit includes: the pair of rolls; a plurality of transfer rolls configured to sequentially transfer and supply the solventless adhesive to one of the pair of rolls; and an application roll disposed opposite to a doctor roll positioned at an end on a side where supply of the solventless adhesive starts among the plurality of transfer rolls via a fine clearance.

A peripheral speed of the doctor roll is from 1.0 to 10.0 m/min.

A laminated film of the present invention is characterized by being produced by the production method described above.

Further, a packaging container of the present invention is characterized by being formed of the laminated film described above.

### Advantageous Effects of Invention

In the method for producing a laminated film according to the present invention, since a coating device having a specific coating unit is used in combination with a solventless adhesive having specific components and a specific viscosity to form an adhesive layer, a clearance is formed between a doctor roll and an application roll of the coating unit and the doctor roll operates at a low speed, so that the solventless adhesive stored between these rolls is not excessively mixed. Therefore, it is possible to extremely suppress air inclusion in the solventless adhesive due to air entrainment, and thus to suppress generation of air bubbles also in an adhesive-applied layer formed on a film by transferring the solventless adhesive. As a result, it is possible to prevent appearance defects such as orange peel from occurring in the resulting laminated film or packaging container, and to ensure stable preservability of contents in the packaging container. In addition, since the solventless adhesive does not use an organic solvent, the environmental load can be reduced.

### Brief Description of Drawings

FIG. 1 is an explanatory view illustrating a structure of an example of a laminator for producing a laminated film of the present invention.
FIG. 2 is an explanatory cross-sectional view illustrating a structure of an example of a laminated film of the present invention.

### Description of Embodiments

Embodiments of the present invention will be described in detail below.

### Method for Producing Laminated Film

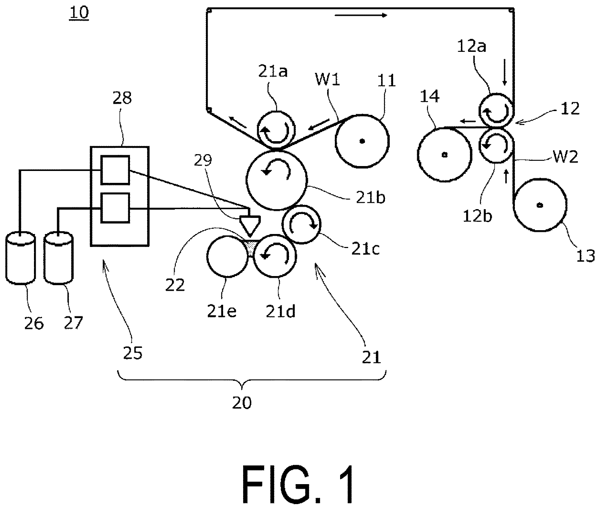

As illustrated in FIG. 1, the method for producing a laminated film of the present invention is a method for producing a laminated film by bonding a pair of long films W1 and W2 with a solventless adhesive while conveying them at a high speed using a laminator 10, and includes coating the first film W1 with a solventless adhesive in which two liquid components (a main agent and a curing agent) are mixed in advance by a coating device 20, and then laminating the second film W2 on the first film W1 while superposing the second film W2 on the film W1 with the films W1 and W2 sandwiching an adhesive-applied layer made of the solventless adhesive.

The laminator 10 includes a coating device 20 configured to apply the film W1 with a solventless adhesive; an unwinding roll 11 configured to supply the first film W1 to be applied with the solventless adhesive to the coating device 20; a laminating part 12 having a pair of pressure rolls 12a and 12b and configured to laminate the second film W2 on the film W1 having an adhesive-applied layer formed thereon, the film W1 having been sent out from the coating device 20; an unwinding roll 13 configured to supply the second film W2; and a winding roll 14 configured to wind a laminate of the films W1 and W2.

The coating device 20 includes a coating unit 21 configured to sequentially transfer the mixed solventless adhesive to the first film W1 by a plurality of rolls and applying the adhesive while thinly spreading the adhesive, and a supply unit 25 configured to supply the solventless adhesive to the coating unit 21.

The coating unit 21 includes a plurality of (five in the illustrated example) rolls 21a to 21e which are rotatably supported and provided in series in axial parallel to each other. To be more specific, the coating unit 21 includes a pair of rolls, i.e., a back-up roll 21a and a coating roll 21b which are opposed to each other and between which the film W1 passes; a metering roll 21c and a doctor roll 21d which are transfer rolls configured to sequentially transfer and supply the solventless adhesive to one (the coating roll 21b) of the pair of rolls; and an application roll 21e which is horizontally adjacent to and disposed on the opposite side of a fine clearance (gap) of the doctor roll 21d, which is one of the plurality of transfer rolls and positioned at an end on a side where supply of the solventless adhesive starts.

The back-up roll 21a, the coating roll 21b, the metering roll 21c and the doctor roll 21d are disposed in series in this order in a state in which their outer peripheral surfaces are in contact with each other, and the film W1 to be coated with the solventless adhesive is held between the coating roll 21b positioned at an end on a side where supply of the solventless adhesive ends and the back-up roll 21a that presses the coating roll 21b. A reservoir 22 configured to temporarily store the mixed main agent and curing agent is formed between the doctor roll 21d positioned at the end on the side where the supply of the solventless adhesive starts and the application roll 21e in a portion above the clearance between the two rolls 21d and 21e. The reservoir 22 is formed by partitioning a space with a substantially V-shaped cross section formed by the clearance with a pair of weir plates (not illustrated) provided to be spaced apart from each other in the longitudinal direction of the rolls 21d and 21e.

The coating roll 21b, the doctor roll 21d and the application roll 21e are metallic rolls having at least outer peripheral surfaces made of metals, and the back-up roll 21a and the metering roll 21c are elastic rolls having outer peripheral surfaces made of elastic materials such as rubber. That is, in the coating unit 21, the elastic rolls and the metallic rolls are alternately disposed from the back-up roll 21a to the doctor roll 21d which are disposed in order, whereby the two adjacent elastic and metallic rolls can be brought into pressure contact with each other.

The back-up roll 21a to the doctor roll 21d disposed in order are respectively controlled to rotate so that, in a state where the respective two adjacent rolls are in pressure contact with each other, the outer peripheral surfaces of the rolls advance in the same direction, i.e., the rolls rotate in mutually different directions, at pressure contact sites. The doctor roll 21d is controlled to rotate so that the outer peripheral surface forming the reservoir 22 moves downward.

Each of the application roll 21e and the doctor roll 21d is provided with a temperature controller (not illustrated) for keeping the solventless adhesive stored in the reservoir 22 at a constant temperature. The coating roll 21b is also provided with a temperature controller (not illustrated) for keeping the solventless adhesive at a constant temperature.

In the present invention, a peripheral speed of the doctor roll 21d is, for example, from 1.0 to 10.0 m/min. The application roll 21e is not rotated or, even if rotated, a peripheral speed of the doctor roll is, for example, 0.1 m/min or less.

A size of the clearance between the doctor roll 21d and the application roll 21e varies depending on the temperature of the solventless adhesive, i.e., the viscosity of the solventless adhesive stored in the reservoir 22, but is preferably set in a range of from 40 to 100 µm, and more preferably from 60 to 80 µm.

If the clearance between the doctor roll 21d and the application roll 21e is excessively small, an amount of the solventless adhesive applied in the widthwise direction of the rolls may greatly vary and a uniform adhesive-applied layer may not be able to be stably formed. If the clearance is excessively large, the solventless adhesive may drip from the reservoir 22.

Since the size of the clearance between the doctor roll 21d and the application roll 21e is in the above-described range and the doctor roll 21d is rotated at the above-described peripheral speed while the application roll 21e is stopped rotating, the solventless adhesive is prevented from being excessively mixed in the reservoir 22, thereby making it possible to extremely suppress air inclusion in the solventless adhesive due to air entrainment, and to suppress generation of air bubbles in the adhesive-applied layer formed on the film W1 by transferring the solventless adhesive with the coating unit 21.

Further, the peripheral speeds of the back-up roll 21a and the coating roll 21b (speed at the pressure contact site) are the same as a supplying speed of the film W1, and the peripheral speed of the metering roll 21c is a value between the peripheral speed of the coating roll 21b and the peripheral speed of the doctor roll 21d which are adjacent to the metering roll 21c because, if the peripheral speeds of the adjacent rolls are greatly different from each other, an appearance defect occurs.

As an example of the dimensions of the application roll 21e and the doctor roll 21d, their outer diameter may be about from 100 mm to 300 mm, and a lateral width of a coating surface constituting the reservoir 22 may be about from 600 mm to 1800 mm. The application roll 21e and the doctor roll 21d may have different outer diameters.

The supply unit 25 includes a main agent tank 26 in which the main agent is accommodated, a curing agent tank 27 in which the curing agent is accommodated, and an adhesive supply part 28 configured to supply the main agent and the curing agent, and may further include a mixer (not illustrated) configured to stir the solventless adhesive stored in the reservoir 22.

In the laminator 10, the first film W1 is conveyed from the unwinding roll 11 to between the pair of rolls 21a and 21b (between the back-up roll 21a and the coating roll 21b) of the coating device 20 at a predetermined speed. On the other hand, in the supply unit 25, the main agent and the curing agent are heated to predetermined temperatures in the main agent tank 26 and the curing agent tank 27, respectively. A predetermined amount of each of the heated main agent and the heated curing agent is supplied from the adhesive supply part 28 to the reservoir 22 between the doctor roll 21d and the application roll 21e through mixing in a static mixer 29. Here, the solventless adhesive is continuously supplied from the supply unit 25 to the reservoir 22 so that a liquid level in the reservoir 22 is kept constant. Then, the solventless adhesive is sequentially transferred from the doctor roll 21d positioned at the end on the side where the supply of the solventless adhesive starts in the coating unit 21 through the metering roll 21c to the coating roll 21b positioned at the end on the side where the supply of the solventless adhesive ends, and is applied onto a surface of the first film W1 passing between the pair of rolls 21a and 21b from the coating roll 21b, thereby forming an adhesive-applied layer.

Next, the film W1 on which the adhesive-applied layer is formed is sent to the laminating part 12. On the other hand, the second film W2 is supplied from the unwinding roll 13 to the laminating part 12. In the laminating part 12, the first film W1 and the second film W2 are pressure-bonded to each other by the pair of pressure rolls 12a and 12b while being overlapped so that the second film W2 is in contact with the adhesive-applied layer on the surface of the first film W1, thereby obtaining an intermediate laminated film in which the pair of films W1 and W2 are laminated. The intermediate laminated film is wound by the winding roll 14. The intermediate laminated film wound by the winding roll 14 is subjected to an aging treatment in which the intermediate laminated film is allowed to stand at room temperature or under heating to cure the adhesive-applied layer and form an adhesive layer, whereby a laminated film in which the pair of films W1 and W2 are adhered to each other by the adhesive layer is obtained.

For example, when the laminated film is formed by laminating three or more films sandwiching adhesive layers, the above-described lamination step is performed to bond two films, and then the same lamination step is repeated, thereby making it possible to produce a laminated film in which three or more films are bonded sandwiching adhesive layers made of the solventless adhesive.

In the above, temperatures for heating the main agent and the curing agent and a temperature of the solventless adhesive in the reservoir 22 are preferably in a range of from 40 to 80°C, for example, and particularly preferably in a range of from 40 to 50°C. In addition, a temperature for coating the solventless adhesive on the first film W1 is preferably in a range of from 40 to 80°C, for example, and particularly preferably in a range of from 60 to 80°C. These temperatures can be controlled by setting the temperatures of the rolls 21a to 21e of the coating unit 21 and setting the temperatures of the main agent tank 26 and the curing agent tank 27. When the coating temperature is within the above-described range, the viscosity of the solventless adhesive can be sufficiently reduced for practical use while thermal damage to the first film W1 is minimized.

A temperature of the pressure rolls 12a and 12b in the laminating part 12 is, for example, from 30 to 80°C.

The supplying speed of each of the films W1 and W2, that is, an application speed of the solventless adhesive is preferably from 100 to 200 m/min.

An amount of the solventless adhesive applied is preferably from 0.5 to 3.0 g/m², and more preferably from 1.2 to 2.6 g/m². If the amount of the solventless adhesive applied is too small, sufficient adhesiveness cannot be obtained, whereas if the amount of the solventless adhesive applied is too large, winding deviation of the laminated film may occur, or the solventless adhesive may leak from an end portion of the laminated film, which may cause poor quality.

A temperature of the aging treatment of the intermediate laminated film wound by the winding roll 14 is, for example, from 30 to 70°C, and a treatment time is, for example, from 48 to 96 hours.

In the laminator 10, other coating conditions can be appropriately set.

### Laminated Film

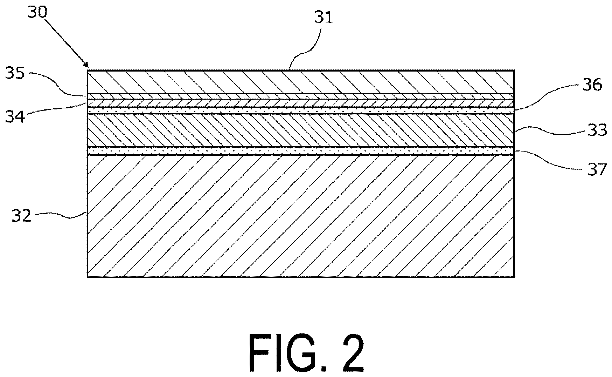

The laminated film of the present invention is obtained by the above-described production method, and has, for example, an outer layer resin film 31, an inner layer resin film 32, and an intermediate layer resin film 33 provided between the inner layer resin film 32 and the outer layer resin film 31, as illustrated in FIG. 2. A vapor deposition layer 35 and an ink layer 34 are formed in this order on an inner surface of the outer layer resin film 31 (surface on a side of the intermediate layer resin film 33). Between the ink layer 34 and the intermediate layer resin film 33, there is formed an adhesive layer 36 made of a solventless adhesive by the laminator 10. Between the inner layer resin film 32 and the intermediate layer resin film 33, there is formed an adhesive layer 37 made of a solventless adhesive by the laminator 10. That is, the laminated film 30 is obtained by repeating the above-described production method twice using the outer layer resin film 31 on which the vapor deposition layer 35 and the ink layer 34 are formed, the intermediate layer resin film 33, and the inner layer resin film 32 as three raw material films.

The outer layer resin film 31 is preferably a film excellent in thermal dimensional stability. The use of such an outer layer resin film 31 facilitates formation of the ink layer since a baking treatment can be performed at a temperature of about 80°C after the outer layer resin film 31 is subjected to, for example, gravure printing. In addition, a biaxially stretched film is preferably used as the outer layer resin film 31, in terms of obtaining high tensile strength.

As a material constituting the outer layer resin film 31, a polyamide-based resin or a polyester-based resin is preferably used.

Furthermore, examples of usable polyamide-based resins include nylon 6, nylon 8, nylon 6,6, a nylon 6/6,6 copolymer, nylon 6,10, meta-xylylene adipamide (MXD6), nylon 11, and nylon 12.

Examples of usable polyester-based resins include polyethylene terephthalate (PET) and polybutylene terephthalate (PBT). Copolyesters containing other polyester units may also be used as long as the properties of these resins are not impaired. Among copolymerization components for forming such a copolyester, isophthalic acid, p-β-oxyethoxybenzoic acid, naphthalene 2,6-dicarboxylic acid, diphenoxyethane-4,4'-dicarboxylic acid, 5-sodium sulfoisophthalic acid, adipic acid, sebacic acid or an alkyl ester derivative thereof, or the like can be used as a dicarboxylic acid component. As a glycol component, propylene glycol, 1,4-butanediol, neopentyl glycol, 1,6-hexylene glycol, cyclohexanedimethanol, an ethylene oxide adduct of bisphenol A, diethylene glycol, triethylene glycol, or the like can be used. These compounds can be used alone, or two or more thereof can be used in combination.

A thickness of the outer layer resin film 31 is appropriately selected depending on the type of the resin constituting the outer layer resin film 31, the application of the laminated film, and the like. For example, when the outer layer resin film 31 is made of nylon, the thickness is preferably from 10 to 30 µm, and, when the outer layer resin film 31 is made of polyethylene terephthalate (PET), the thickness is preferably from 6 to 28 µm.

A surface of the outer layer resin film 31 in contact with the adjacent layer is preferably subjected to a surface modification treatment such as a corona treatment in order to improve adhesion to the adjacent layer.

As a material constituting the inner layer resin film 32, a resin excellent in heat sealability is preferably used in order to form a pouch packaging bag or a heat seal lid. Examples of such a resin include polyolefin-based resins such as polyethylene (PE) and polypropylene (PP).

A thickness of the inner layer resin film 32 is not particularly limited. For example, when the inner layer resin film 32 is made of polyethylene, the thickness is preferably from 50 to 200 µm, and, when the inner layer resin film 32 is made of polypropylene, the thickness is preferably from 30 to 150 µm.

As the inner layer resin film 32, a non-stretched film is preferably used.

As a material constituting the intermediate layer resin film 33, a resin having gas barrier properties can be used, and specific examples thereof include nylon resins such as aliphatic nylons including nylon 6, nylon 8, nylon 11, nylon 12, nylon 6,6, nylon 6,10, nylon 10,6, and a nylon 6/6,6 copolymer, and partially aromatic nylons such as polymetaxylylene adipamide, and polyglycolic acid resins.

Examples of the material constituting the intermediate layer resin film 33 include olefin-based resins such as polyethylene (PE) including low-density polyethylene (LDPE), medium-density polyethylene (MDPE), high-density polyethylene (HDPE), linear low-density polyethylene (LLDPE) and linear very-low-density polyethylene (LVLDPE), polypropylene (PP), ethylene-propylene copolymer, polybutene-1, ethylene-butene-1 copolymer, propylene-butene-1 copolymer, ethylene-propylene-butene-1 copolymer, ethylene-vinyl acetate copolymer (EVA), ion-crosslinked olefin copolymer (ionomers), and mixtures thereof.

A thickness of the intermediate layer resin film 33 is not particularly limited, but is preferably in a range of from 5 to 100 µm.

The ink layer 34 is formed by, for example, gravure printing on the vapor deposition layer 35 formed on the outer layer resin film 31.

A thickness of the ink layer 34 is preferably from 1 to 8 µm.

As a material constituting the vapor deposition layer 35, a metal material such as aluminum, a non-metal inorganic material such as silica, or the like can be used.

The adhesive layers 36 and 37 are formed of a specific solventless adhesive which will be described in detail below. First, the solventless adhesive is a two-part reaction curable adhesive composed of a main agent and a curing agent.

Thicknesses of the adhesive layers 36 and 37 are preferably from 0.5 to 3 µm.

### Solventless Adhesive

As the main agent constituting the solventless adhesive, it is preferable to use a polyester-based resin having good adhesion to the inner layer resin film 32, the intermediate layer resin film 33, and the ink layer 34 and excellent lamination strength and impact resistance, and a polyester polyol resin is particularly preferable.

The polyester polyol resin may be produced by an esterification reaction between a polybasic acid such as succinic acid, adipic acid, azelaic acid, sebacic acid, phthalic acid, isophthalic acid, or terephthalic acid and a polyhydric alcohol such as ethylene glycol, 1,2-propanediol, 1,3-butanediol, 1,4-butanediol, 3-methyl-1, 5-pentanediol, 1,6-hexanediol, 1,4-cyclohexanedimethanol, neopentyl glycol, 3,3-bis(hydroxymethyl)heptane, diethylene glycol, dipropylene glycol, glycerin, or trimethylolpropane.

Specific examples of the polyester polyol resin include (1) adipate-based polyester glycols such as poly(ethylene adipate), poly(diethylene adipate), polypropylene adipate), poly(tetramethylene adipate), poly(hexamethylene adipate), and poly(neopentylene adipate), (2) polycaprolactone-based polyester glycols such as poly-ε-caprolactone, and (3) other polyester polyol resins such as poly(hexamethylene sebacate) and poly(hexamethylene carbonate).

Further, in addition to the polyester-based resin, for example, a polyurethane-based compound may be contained as the main agent. The use of such a main agent can ensure adhesion to the ink layer 34 because the ink layer 34 usually contains a urethane component.

A number average molecular weight of the resin constituting the main agent is preferably from 400 to 1500, and more preferably from 500 to 1000. When the number average molecular weight of the resin constituting the main agent is less than 400, the viscosity of the solventless adhesive decreases, and as a result, suitability for continuous lamination may deteriorate when manufacturing the laminated film. Further, since the number of terminal reactive groups increases, it is necessary to increase the amount of the curing agent. As a result, there is a problem in that the hardness of the obtained adhesive layers 36 and 37 increases due to an increased amount of crosslinks and the impact resistance of the adhesive layers 36 and 37 deteriorates. On the other hand, when the number average molecular weight of the resin constituting the main agent is more than 1500, the impact resistance of the obtained adhesive layers 36 and 37 is improved, but the viscosity of the solventless adhesive increases. As a result, a wetting failure may occur when applying the solventless adhesive, thereby causing an appearance defect or reduction in the lamination strength of the obtained laminated film 30.

The viscosity of the main agent at 50°C is preferably from 600 to 1800 mPa·s, and more preferably from 1000 to 1400 mPa·s. When the viscosity of the main agent is less than 600 mPa·s, transfer unevenness of the roll occurs, the film formation of the adhesive layers 36 and 37 becomes unstable, and an appearance defect or extreme reduction in lamination strength of the obtained laminated film 30 may occur. On the other hand, when the viscosity of the main agent is more than 1800 mPa·s, a wetting failure is likely to occur at the time of coating the solventless adhesive, and an appearance defect or reduction in lamination strength of the obtained laminated film 30 may occur.

As the curing agent constituting the solventless adhesive, it is preferable to use an isocyanate compound, particularly a mixture of an aliphatic isocyanate and an araliphatic diisocyanate.

As the aliphatic isocyanate constituting the curing agent, butane-1,4-diisocyanate, 1,6-hexamethylene diisocyanate (HDI), isopropylene diisocyanate, methylene diisocyanate, 2,2,4-trimethylhexamethylene diisocyanate, m-tetramethylxylylene diisocyanate, lysine diisocyanate, dimer diisocyanate obtained by converting a carboxyl group of dimer acid into an isocyanate group, and the like can be used alone or in combination of two or more thereof. Among them, 1,6-hexamethylene diisocyanate (HDI) is preferable.

Examples of the aromatic aliphatic diisocyanate constituting the curing agent include 1,3-xylene diisocyanate, 1,4-xylene diisocyanate, or their mixtures (XDI), 1,3-tetramethylxylene diisocyanate, 1,4-tetramethylxylene diisocyanate, or their mixtures (TMXDI), and ω,ω'-diisocyanate-1,4-diethylbenzene.

A number average molecular weight of the resin constituting the curing agent is preferably from 400 to 1500, and more preferably from 500 to 1000. When the number average molecular weight of the resin constituting the curing agent is less than 400, the viscosity of the solventless adhesive decreases, and as a result, suitability for continuous lamination may deteriorate when manufacturing the laminated film. Further, since the number of terminal reactive groups increases, it is necessary to increase the amount of the main agent. As a result, there is a problem in that the hardness of the obtained adhesive layers 36 and 37 increases due to an increased amount of crosslinks and the impact resistance of the adhesive layers 36 and 37 deteriorates. On the other hand, when the number average molecular weight of the resin constituting the curing agent is more than 1500, the impact resistance of the obtained adhesive layers 36 and 37 is improved, but the viscosity of the solventless adhesive increases. Thus, a wetting failure may occur when applying the solventless adhesive, thereby causing an appearance defect or reduction in the lamination strength of the obtained laminated film 30.

The viscosity of the curing agent constituting the solventless adhesive is preferably from 150 to 1300 mPa·s, and more preferably from 450 to 850 mPa·s at 50°C. When the viscosity of the curing agent is less than 150 mPa·s, the obtained adhesive layers 36 and 37 becomes soft, and as a result, the lamination strength may become low. On the other hand, when the viscosity of the curing agent is more than 1300 mPa s, the obtained adhesive layers 36 and 37 becomes hard, and as a result, the impact resistance may become low.

In the solventless adhesive, with respect to 100 parts by mass of the main agent, the curing agent is preferably contained in a range of from 30 to 200 parts by mass, and is particularly preferably in a range of from 30 to 70 parts by mass. When the ratio of the curing agent is too small, the obtained adhesive layers 36 and 37 are insufficiently crosslinked, and the lamination strength of the obtained laminated film 30 may deteriorate. On the other hand, when the ratio of the curing agent is too large, the main agent and the curing agent are not sufficiently mixed, and thus the obtained adhesive layers 36 and 37 include a mixture of an insufficiently crosslinked portion and an excessively crosslinked portion. As a result, the lamination strength and the impact resistance of the obtained laminated film 30 may deteriorate.

In the present invention, the viscosity of the solventless adhesive is from 700 to 2000 mPa·sPa·s, and more preferably from 1000 to 1600 mPa·s at 50°C. When the viscosity of the solventless adhesive is less than 700 mPa·s, the solventless adhesive may drip from the reservoir 22, or a transfer failure between rolls may occur during coating of the solventless adhesive, which results in "transfer unevenness". In addition, since the solventless adhesive is not uniformly coated and is partially reduced, the lamination strength and impact resistance may be reduced. On the other hand, when the viscosity of the solventless adhesive exceeds 2000 mPa s, a "wetting failure" may occur at the time of coating the solventless adhesive, and the resulting adhesive layers 36 and 37 may become partially thin. The presence of thin portions in the adhesive layers 36 and 37 may cause reductions in lamination strength and impact resistance.

The solventless adhesive may contain a polyurethane-based compound in addition to the main agent and the curing agent. The blending of the polyurethane-based compound can ensure adhesion to the ink layer 34 because the ink layer 34 usually contains a urethane component.

The solventless adhesive may further contain various additive agents such as a filler, a softener, an antioxidant, a stabilizer, an adhesion promoter, a leveling agent, an anti-foaming agent, a plasticizer, an inorganic filler, a tackifying resin, a fiber, a colorant such as a pigment, or a lifetime extender.

Furthermore, the solventless adhesive may contain an adhesion promoter. As the adhesion promoter, a coupling agent such as a silane coupling agent, a titanate-based coupling agent, or an aluminum-based coupling agent, an epoxy resin, or the like can be used.

Specific examples of the silane coupling agent include aminosilanes such as γ-aminopropyltriethoxysilane, y-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane, epoxy silanes such as β-(3,4-epoxycyclohexyl)ethyltrimethoxysilane, γ-glycidoxypropyltrimethoxysilane, and γ-glycidoxypropyltriethoxysilane, vinylsilanes such as vinyltris(β-methoxyethoxy)silane, vinyltriethoxysilane, vinyltrimethoxysilane, and γ-methacryloxypropyltrimethoxysilane, hexamethyldisilazane, and γ-mercaptopropyltrimethoxysilane.

Specific examples of the titanate-based coupling agent include tetraisopropoxytitanium, tetra-n-butoxytitanium, butyl titanate dimer, tetrastearyltitanate, titanium acetylacetonate, titanium lactate, tetraoctylene glycol titanate, titanium lactate, and tetrastearoxytitanium.

Specific examples of the aluminum-based coupling agent include acetoalkoxyaluminum diisopropylate.

Specific examples of the epoxy resin include various commercially available epoxy resins such as epibis-type, novolac-type, β-methyl epichlorohydrin-type, cyclic oxirane-type, glycidyl ether-type, glycidyl ester-type, polyglycol ether-type, glycol ether-type, epoxidized fatty ester-type, polyvalent carboxylic ester-type, aminoglycidyl-type, and resorcinol-type epoxy resins.

### Packaging Container

The packaging container of the present invention is formed of the above-described laminated film, and can be suitably used as a food packaging container such as a retort pouch which is subjected to a heating treatment in a state in which food is accommodated and hermetically sealed therein.

The heating treatment to be performed on the food packaging container is, for example, a treatment in which the food packaging container is heated to 100°C or higher, and examples thereof include a sterilization treatment involving heating performed on a normal food packaging container, including, but are not limited to, a retort sterilization treatment which enables normal temperature distribution and a heating treatment at 120°C for less than 4 minutes which enables chilled distribution. The heating treatment refers to a heating treatment to be performed on various known foods. The retort sterilization treatment refers to a pressure heating treatment in which, for example, a product filled in a heat-resistant container is heated with vapor or hot water at about from 110°C to 130°C for about several tens of minutes while being pressurized so that the container is not damaged by an internal pressure of the product due to an increase in temperature of the product, and the F₀ value is 3.1 minutes or more, which is at least equivalent to or more than that at 120°C for 4 minutes. In addition, the heat sterilization which enables chilled distribution refers to, for example, a heating treatment equivalent to or more than that at 90°C for 10 minutes, which is generally used in many cases.

The embodiment in the present invention has been described above. However, the present invention is not limited to the above embodiment, and various modifications are possible.

For example, the layer structure of the laminated film is not limited to the structure illustrated in FIG. 2, and may consist of two resin films, i.e., an outer layer resin film and an inner layer resin film, or may have a plurality of intermediate layer resin films. In addition, the ink layer and the vapor deposition layer are provided as necessary and are not essential in the present invention.

### Example

An example of the present invention will be described below, but the present invention is not limited thereto.

### Example 1

### Solventless Adhesive

Table 1 shows the composition of the solventless adhesive used in Example 1. In Table 1, the viscosities of the main agent, the curing agent, and the solventless adhesive were measured by a method in accordance with JIS K7117-2 using a B8L type viscosimeter available from TOKIMEC.

### Resin Film

As an outer layer resin film, a biaxially stretched polyethylene terephthalate (PET) film having a thickness of 12 µm and having an alumina vapor deposition film formed on one surface thereof was used.

As an intermediate layer resin film, a biaxially stretched nylon film having a thickness of 15 µm was used.

As an inner layer film, a non-stretched polypropylene (CPP) film having a thickness of 70 µm was used.

### Production of Laminated Film

A laminated film was produced in the following manner using a laminator having the structure illustrated in FIG. 1.

The main agent and the curing agent shown in the following Table 1 were placed in a main agent tank and a curing agent tank, respectively, and heated to 50°C. The main agent and the curing agent were supplied to an adhesive application part and mixed so as to attain the mass blending ratio shown in the following Table 1 by an adhesive supply part to prepare a solventless adhesive. Then, in the adhesive application part, the solventless adhesive was applied at 80°C to one surface of the outer layer resin film supplied from an unwinding roll to form an adhesive-applied layer. The amount of the solventless adhesive applied was 1.7 g/m² and the application speed was 150 m/min. Thereafter, the outer layer resin film on which the adhesive-applied layer was formed was conveyed to a laminating part. In this laminating part, the outer layer resin film and the intermediate layer resin film on which the vapor deposition layer was formed and which was supplied from the unwinding roll were laminated under pressure at 50°C to prepare a first intermediate laminated film. The lamination speed was 150 m/min.

The obtained first intermediate laminated film was wound on a roll, an adhesive-applied layer was formed on the other surface of the intermediate layer resin film in the first intermediate laminated film under the same conditions as described above, and the intermediate layer resin film and the inner layer resin film were laminated to produce an intermediate laminated film. The obtained intermediate laminated film was held at 40°C for 3 days to perform an aging treatment, thereby producing a laminated film.

### Preparation of Packaging Container (Pouch)

From the obtained laminated film, two pieces were cut out so as to have a width of 130 mm and a height of 175 mm, and the two laminated films whose inner surface layers faced were heat-sealed at 200°C to seal three sides, i.e., the bottom portion and both the side portions, thereby producing a packaging container (pouch) having a width of 130 mm, a height of 175 mm and a volume of 200 ml.

The pouch was filled with water (total content: 180 g), hermetically sealed by heat sealing, and then subjected to hot water pressure sterilization shower cooling (sterilization temperature: 127°C, sterilization time: 30 minutes, sterilization pressure: 0.3 MPa).

### Evaluation of Appearance Defect

The appearance of the packaging container before and after the hot water pressure sterilization shower cooling (heat sterilization treatment) was visually observed in a range: a width of 1 m and a length of 1 m to examine the presence or absence of spot-like fine uneven patterns (orange peel). The case where no spot-like fine uneven pattern was observed was evaluated as good, and the case where spot-like fine uneven patterns were observed was evaluated as poor.

The results are shown in Table 1 below.

**[Table 1]**

| | | Example 1 |
|---|---|---|
| Main agent | Main agent component | Polyester resin |
| | Number average molecular weight | About 600 |
| | Viscosity at 50°C (mPa·s) | 1210 |
| Curing agent | Curing agent component | XDI + HDI |
| | Number average molecular weight | About 670 |
| | Viscosity at 50°C (mPa·s) | 650 |
| Solventless adhesive | Weight blending ratio (main agent/curing agent) | 50/100 |
| | Viscosity at 50°C (mPa·s) | 1340 |
| Appearance defect | Before heat sterilization treatment | ○ |
| | After heat sterilization treatment | ○ |

| | | |
|---|---|---|
| XDI: a mixture of 1,3-xylylene diisocyanate and 1,4-xylylene diisocyanate HDI: 1,6-hexamethylene diisocyanate | | |

As is clear from the results of Table 1, it was confirmed that the packaging container of Example 1 has a good appearance without air bubbles generated in the adhesive layer both before and after the heat sterilization treatment, and therefore is useful as a food packaging container.

### Reference Signs List

10 Laminator
11 Unwinding roll
12 Laminating part
12a, 12b Pressure roll
13 Unwinding roll
14 Winding roll
20 Coating device
21 Coating unit
21a Back-up roll
21b Coating roll
21c Metering roll
21d Doctor roll
21e Application roll
22 Reservoir
25 Supply unit
26 Main agent tank
27 Curing agent tank
28 Adhesive supply part
29 Static mixer
30 Laminated film
31 Outer layer resin film
32 Inner layer resin film
33 Intermediate layer resin film
34 Ink layer
35 Vapor deposition layer
36, 37 Adhesive Layer
W1, W2 Film

## Claims

1. A method for producing a laminated film, the method comprising:
coating a first film with a solventless adhesive in a coating device, the coating device including a pair of rolls opposed to each other, the first film passing between the pair of rolls; and
laminating a second film on the first film while superposing the second film on the first film with the first film and the second film sandwiching an adhesive-applied layer made of the solventless adhesive,
wherein
the solventless adhesive contains
a main agent made of a polyester-based resin, and
a curing agent made of an aliphatic isocyanate,
the solventless adhesive has a viscosity at 50°C of from 700 to 2000 mPa s,
the coating device further includes a coating unit, the coating unit including
the pair of rolls,
a plurality of transfer rolls configured to sequentially transfer and supply the solventless adhesive to one of the pair of rolls, and
an application roll disposed on the opposite side of a fine clearance from a doctor roll with a fine clearance, the doctor roll being one of the plurality of transfer rolls and positioned at an end on a side where supply of the solventless adhesive starts, and
a peripheral speed of the doctor roll is from 1.0 to 10.0 m/min.

2. The method for producing a laminated film according to claim 1, wherein the fine clearance has a size of from 40 to 100 µm.

3. The method for producing a laminated film according to claim 1 or 2, wherein a peripheral speed of the application roll is from 0 to 0.1 m/min.

4. The method for producing a laminated film according to any one of claims 1 to 3,
wherein the main agent of the solventless adhesive has a viscosity at 50°C of from 600 to 1800 mPa s.

5. The method for producing a laminated film according to any one of claims 1 to 4, wherein an amount of the solventless adhesive applied to the adhesive-applied layer is from 0.5 to 3.0 g/m².

6. A laminated film produced by the production method according to any one of claims 1 to 5.

7. A packaging container formed of the laminated film according to claim 6.

8. The packaging container according to claim 7, wherein the packaging container is a food packaging container which is subjected to a heating treatment in a state in which a food is accommodated and hermetically sealed therein.
